# EUROPÄISCHE PATENTSCHRIFT

(11) **EP 1 609 353 B1**
(45) Veröffentlichungstag und Bekanntmachung des Hinweises auf die Patenterteilung: **26.03.2008**
(21) Anmeldenummer: 05010409.0
(22) Anmeldetag: 13.05.2005
(51) Int. Cl.: A01F 12/30

(54) **Schüttlerhilfe an einem Mähdrescher**
Straw walker aid for a combine
Dispositif d'assistance pour secoueur de paille d'une moissonneuse-batteuse

(30) Priorität: 25.06.2004 DE 102004031054
(43) Veröffentlichungstag der Anmeldung: 28.12.2005
(73) Patentinhaber: CLAAS Selbstfahrende Erntemaschinen GmbH, 33428 Harsewinkel (DE)
(72) Erfinder: Speckamp, Dirk, 59073 Hamm (DE); Dammann, Martin, 33428 Harsewinkel (DE)

(56) Entgegenhaltungen:
- EP-A- 0 567 192
- EP-A- 0 933 017
- US-B1- 6 190 253

## Beschreibung

Die Erfindungen betrifft eine Schüttlerhilfe zur Auflockerung des Gutstroms auf dem Abscheideorgan eines Mähdreschers nach dem Oberbegriff des Anspruch 1.
Aus der EP 0 933 017 ist eine als Rotationsförderer ausgeführte Schüttlerhilfe bekannt, die aus einem drehbaren Rotationskörper mit einer nahezu geschlossenen, zylinderförmigen Mantelfläche und mehreren darin exzentrisch und drehbar gelagerten Mitnehmern besteht. Die Mitnehmer sind in Abständen in Richtung der Rotationsachse des Rotationskörpers angeordnet und radial durch Öffnungen in Mitnehmerführungen in der Mantelfläche beweglich. Die Mantelfläche des Rotationskörpers setzt sich aus Metallabdeckungen zusammen, die derart gebogen sind, dass sich radial nach innen versetzte Bereiche ergeben, die parallel zur Rotationsachse des Rotationskörpers verlaufen. Die vorstehenden Teile des Rotationsförderers wie beispielsweise die Mitnehmerführungen sind in den nach innen versetzten Bereichen versenkt, damit die Getreidehalme nicht daran haften bleiben. Befindet sich ein Mitnehmer in einer radial nach innen versetzten Position, dann befindet sich das zugehörige freie Ende des Mitnehmers innerhalb des äußeren Durchmessers des radial nicht versetzten Bereichs des Rotationskörpers. Die Mitnehmer werden bei einem Umlauf des Rotationskörpers durch die Mitnehmerführungen ein- und ausgefahren, dabei greifen sie zur Auflockerung in das auf dem Schüttler beförderte Stroh ein und heben es an, um die Abscheidung der Restkörner zu verbessern. Das Aufreißen der Gutschicht begünstigt zudem das Durchdringen der Körner durch das Stroh. Das an den Mitnehmern anhaftende Erntegut wird beim Einfahren der Mitnehmer an den Mitnehmerführungen abgestreift. Nachteilig bei dem bekannten Rotationsförderer ist, dass nicht verhindert werden kann, das Erntegut über den Rotationsförderer gefördert wird oder sich um den Rotationsförderer wickelt.

Aus der US 6,190,253 B1 ist ebenfalls eine als Rotationsförderer ausgeführte Schüttlerhilfe bekannt, die aus einem drehbaren Rotationskörper mit einer nahezu geschlossenen, zylinderförmigen Mantelfläche und mehreren darin exzentrisch und drehbar gelagerten Mitnehmern besteht. Da die Konsistenz des Ernteguts wechseln kann, wird durch Verstellung der Drehrichtung und/oder Exzentrizität der Mitnehmer die Gutmitnahmeintensität beeinflusst. Die US 6,190,253 B1 offenbart jedoch keine Möglichkeit, die Gutmitnahmeintensität in Abhängigkeit der während des Emteprozesses ermittelten Gutbedingungen anzupassen.

Der Erfindung liegt daher die Aufgabe zugrunde eine Schüttlerhilfe zu schaffen, die die beschriebenen Nachteile des Standes der Technik vermeidet und durch eine an die momentanen Erntebedingungen angepasste Einstellung, insbesondere ein reduziertes Gutmitnahmeverhalten aufweist.
Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass die Gutmitnahmeintensität mit einer Überwurfmesseinrichtung ermittelt wird, die oberhalb der Fördertrommel angeordnet ist, kann das die Fördertrommel umwickelnde und/oder das momentan über die Fördertrommel geförderte Erntegut unmittelbar gemessen werden.

Aufgrund dessen, dass die Gutmitnahmeintensität durch die Änderung des Formschlusses sowie des Kraftschlusses zwischen dem Gutstrom und den Förderzinken beeinflussbar ist, bewirkt eine Veränderung der Eindringtiefe der Förderzinken in das Erntegut und/oder der Anzahl der in das Erntegut eindringenden Förderzinken eine Zu- oder Abnahme der Gutmitnahmeintensität des Auflockerungs-und Förderorgans.

Auf konstruktiv besonders einfache Weise wird die kraft- und formschlussabhängige Intensität der Gutmitnahme dadurch beeinflusst, dass die Drehzahl des Auflockerungs- und Förderorgans änderbar ist.

Indem die Förderzinken auf einer kreisförmigen Bewegungsbahn umlaufen, deren Lage relativ zur Fördertrommel änderbar ist, kann die Intensität der Gutmitnahme auch durch die Lageänderung der Bewegungsbahn der Förderzinken beeinflusst werden.

Die Überwurfmesseinrichtung ermittelt in vorteilhafter Weiterbildung der Erfindung einen in Drehrichtung der Fördertrommel über die Fördertrommel hinweg geförderten Erntegutstrom, da nur dieser Erntegutstrom ein Umwickeln und Verstopfen des Auflockerungs- und Förderorgans bewirkt.

Dadurch, das die Überwurfmesseinrichtung aus wenigstens einer drehbar gelagerten Klappe besteht, die durch den Aufprall des Erntegutstroms verschwenkt wird, kann die Überwurfmesseinrichtung einfach und preiswert hergestellt werden.

Indem der Klappe ein Öffner zugeordnet ist, der ein Signal generiert, wenn die Klappe sich außerhalb einer Verschlussposition befindet, wird nur eine einfache Steuerung für die Verarbeitung eines Signals benötigt.

In einer alternativen Ausführung der erfindungsgemäßen Schüttlerhilfe besteht die Überwurfmesseinrichtung aus wenigstens einer Lichtschranke, so dass der Erntegutstrom verschleißminimierend berührungslos gemessen werden kann. In vorteilhafter Weiterbildung der alternativen Ausführung ist die Lichtschranke quer zur Drehrichtung der Fördertrommel angeordnet, damit der Erntegutstrom über die ganze Breite der Fördertrommel ermittelt werden kann.

Indem die Lage der Bewegungsbahn der Förderzinken über ein Stellglied geändert wird, kann die Verstellung der Bewegungsbahn der Förderzinken automatisch erfolgen.

Dadurch, dass das Stellglied und die Überwurfmesseinrichtung mit einer Steuereinheit verbunden sind, kann die Betätigung des Stellgliedes in Abhängigkeit von der Gutmitnahmeintensität gesteuert werden.

In vorteilhafter Weiterbildung der Erfindung kann die Steuereinheit zur Generierung des Stellsignals auch erntegutspezifische sowie maschinenspezifische Parameter berücksichtigen. Dies hat insbesondere den Vorteil, dass der Kraft- und Formschluss zwischen dem Gutstrom und dem Auflockerungs- und Förderorgan so frühzeitig geändert werden kann, dass eine oberschlächtige Mitnahme von Erntegut durch die Förderelemente des Auflockerungs- und Förderorgans weitgehend vermieden werden kann.

Als bevorzugte, die Gutmitnahme beeinflussende erntegutspezifische Parameter haben sich die Erntegutart, der Erntegutdurchsatz und die Erntegutfeuchte erwiesen.

Insbesondere für die Definition der Grundeinstellung des Auflockerungs- und Förderorgans können durch die stellsignalgenerierende Steuereinrichtung auch die maßgeblich von dem zu bearbeitenden Erntegut beeinflussten maschinenspezifischen Parameter wie etwa kinematische Parameter des Schneidwerks sowie der Arbeitsorgane berücksichtigt werden.

Dadurch, dass die Bewegungsbahn bis zu einer Überwurfreserveposition verstellbar ist, die eine vorgewählte Position unterschreitet und das die Bewegungsbahn anschließend in die vorgewählte Position verstellt wird, wenn die Überwurfmesseinrichtung in der Überwurfreserveposition für einen Zeitraum keinen Erntegutstrom sensiert, kann die Schüttlerhilfe so eingestellt werden, dass eine Sicherheitsreserve bis zum Überwurf des Ernteguts besteht. Indem das Stellglied vollständig ausfährt bis die Bewegungsbahn eine obere Position erreicht, sobald die Überwurfmesseinrichtung einen Erntegutstrom sensiert, kann ein Erntegutstau vor der Schüttlerhilfe verhindert werden.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: eine Seitenansicht eines Mähdreschers,
- Fig.2: eine Ansicht des Auflockerungs- und Förderorgans mit der Bewegungsbahn der Förderzinken in einer oberen Position,
- Fig.3: eine Ansicht des Auflockerungs- und Förderorgans mit der Bewegungsbahn der Förderzinken in einer unteren Position.

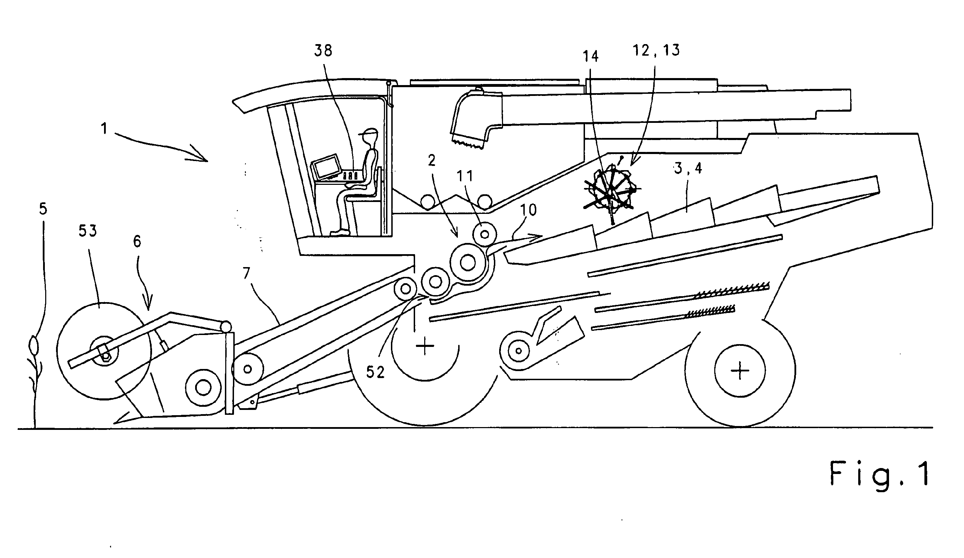

Bei dem in Figur 1 gezeigten Ausführungsbeispiel der Erfindung handelt es sich um einen selbstfahrenden Mähdrescher 1 mit einem sogenannten Tangentialdreschwerk 2 und einem diesen nachgeordneten Hordenchüttler 3 als Abscheideeinrichtung 4. Das Erntegut 5 wird von einem Schneidwerk 6 aufgenommen, das das Erntegut 5 einem Schrägförderer 7 zuführt. Der Schrägförderer 7 übergibt das Erntegut 5 an das Tangentialdreschwerk 2, welches das Erntegut mechanisch bearbeitet. Von dem Tangentialdreschwerk 2 gelangt ein im Wesentlichen aus ausgedroschenen Halmen bestehender Gutstrom 10 über die Wendetrommel 11 auf den Hordenschüttler 3, der den Gutstrom 10 in den rückwärtigen Bereich des Mähdreschers 1 fördert. Dabei werden die noch im Gutstrom 10 enthaltenen Körner, sowie eventuell Kurzstroh und Spreu abgetrennt. Oberhalb des Hordenschüttlers 3 ist ein als sogenannte Schüttlerhilfe 12 arbeitendes Auflockerungs- und Förderorgan 13 angeordnet, das um eine quer zur Fahrtrichtung des Mähdreschers 1 liegende Drehachse 14 entgegen dem Uhrzeigersinn drehend angetrieben wird. Die Schüttlerhilfe 12 lockert den Gutstrom 10 auf und unterstützt die Förderung des Gutstroms 10 auf dem Hordenschüttlern 3.

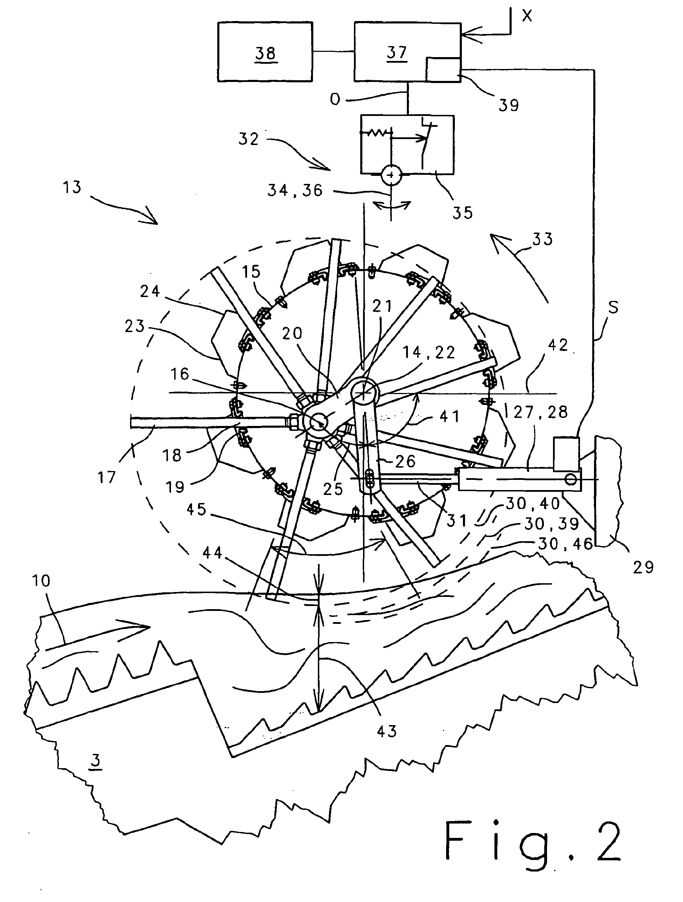

In Fig.2 ist ein vergrößerter Ausschnitt aus Fig.1 dargestellt. Das Auflockerungs- und Förderorgan 13 besteht aus einer annähernd geschlossenen, um die Drehachse 14 drehbar antreibbaren Fördertrommel 15 und einer darin angeordneten Kurbelwelle 16, die um die Drehachse 14 relativ zur Fördertrommel 15 verdrehbar ist. Auf der Kurbelwelle 16 sind mehrere Förderzinken 17 drehbar gelagert, die durch Durchlässe 18 in der Fördertrommel 15 nach außen ragen. Beim Drehen der Fördertrommel 15 ergibt sich bei stillstehender Kurbelwelle 16 eine Relativbewegung zwischen den Förderzinken 17 und der Fördertrommel 15, bei der die Förderzinken 17 periodisch durch die Durchlässe 18 aus der Fördertrommel 15 hervortreten und in diese eintauchen. Dabei ändert sich die Winkelorientierung der Förderzinken 17 in Bezug zur Fördertrommel 15 in einem bestimmten Ausmaß, so dass der Querschnitt der Durchlässe 18 entsprechend größer als der Querschnitt der Förderzinken 17 ausgeführt ist. Die Länge der Förderzinken 17 ist so gewählt, dass sie nicht über die Öffnung hinaus in die Fördertrommel 15 eintauchen sondern stets in dem Durchlass 18 geführt sind. Im Bereich der Durchlässe 18 ist die Fördertrommel 15 durch Führungselemente 19 verstärkt, die außen auf der Fördertrommel 15 lösbar befestigt sind. Die Führungselemente 19 dienen gleichzeitig als verbesserte Führung für die Förderzinken 17 in den Durchlässen 18. Im Bereich der Führungselemente 19 sind zusätzlich an sich bekannte Abstreifelemente 23 mit Schlitzen 24 an der Fördertrommel 15 angebracht. Beim Drehen der Fördertrommel 15 treten die Förderzinken 17 durch die Schlitze 24 periodisch aus den Abstreifelementen 23 ein und aus. Beim Einfahren in die Schlitze 24 wird an den Förderzinken 17 anhaftendes Erntegut an den Abstreifelementen 23 abgestreift. Sowohl die Führungselemente 19 als auch die Abstreifelemente 23 weisen eine Vielzahl von über die Fördertrommel 15 überstehende Vorsprüngen auf, die das Erntegut mitnehmen bzw. an denen das Erntegut anhaftet, so dass Erntegut über das Auflockerungs- und Förderorgan 13 gefördert wird oder sich um dieses wickeln kann.

Die Kurbelwelle 16 ist über einen Tragarm 20 mit einem Achsstummel 21 starr verbunden, der durch die Stirnseite der Fördertrommel 15 nach außen ragt, wobei die Drehachse 22 des Achsstummels 21 mit der Drehachse 14 der Fördertrommel 15 fluchtet. An dem Achsstummel 21 ist in einem Winkel 25 zu dem Tragarm 20 ein Verstellhebel 26 verdrehsicher angebracht, an dessen freiem Ende erfindungsgemäß ein als Spindelantrieb 27 ausgeführtes Stellglied 28 angelenkt ist. Der Spindelantrieb 27 ist andernends mit der Seitenwand 29 des Mähdreschers 1 gelenkig verbunden. Mittels des mit einer noch näher zu beschreibenden Steuereinheit 37 in Wirkverbindung stehenden Stellgliedes 28 kann die Kurbelwelle 16 stufenlos um die Drehachse 14 relativ zur Fördertrommel 15 verdreht werden.
Während eines Umlaufs der Fördertrommel 15 drehen sich die Förderzinken 17 um die Kurbelwelle 16 auf einer kreisförmigen Bewegungsbahn 30 und werden dabei durch die Durchlässe 18 der Fördertrommel 15 und die Schlitze 24 der Abstreifelemente 23 ein- und ausgefahren.
Fährt die Spindel 31 des Spindelantriebs 27 ein oder aus, wird die Lage der Kurbelwelle 16 und damit auch die Lage der kreisförmigen Bewegungsbahn 30 der Förderzinken 17 relativ zur Fördertrommel 15 und relativ zu dem Hordenschüttler 3 verändert. Dabei wird die Kurbelwelle 16 im Uhrzeigersinn um die Drehachse 14 gedreht, wenn die Spindel 31 des Spindelantriebs 27 ausfährt und umgekehrt entgegen dem Uhrzeigersinn gedreht, wenn die Spindel 31 einfährt. Wird die Kurbelwelle 16 im Uhrzeigersinn um die Drehachse 14 gedreht, bewegt sie sich nach oben, wodurch sich die Bewegungsbahn 30 vom Hordenschüttler 3 weg bewegt.
Umgekehrt nähert sich die Bewegungsbahn 30 dem Hordenschüttler 3, wenn die entgegen dem Uhrzeigersinn um die Drehachse 14 gedrehte Kurbelwelle 16 sich nach unten bewegt.
Oberhalb der Fördertrommel 15 ist eine Überwurfmesseinrichtung 32 angeordnet, mit der ein über die Fördertrommel 15 in Drehrichtung der Fördertrommel 15 geförderter Erntegutstrom 33 detektiert wird. Die Überwurfmesseinrichtung 32 besteht im dargestellten Ausführungsbeispiel aus einer schwenkbaren Klappe 34, die durch die Energie des aufprallenden Erntegutstroms 33 betätigt wird. Ein an der Klappe 34 angeschlossener Öffner 35 generiert ein Stellungssignal O sobald die Klappe 34 aus einer geschlossenen Position 36 heraus verschwenkt ist. Das Stellungssignal O wird an die Steuereinheit 37 übertragen, welche bei Vorhandensein eines Stellungssignals O ein Steuerbefehlssignal S generiert, das an das Stellglied 28 übermittelt wird. Die Steuereinheit 37 ist mit einem Bedienfeld 38 verbunden, über das ein Bediener eine vorgewählte Position 39 der Bewegungsbahn 30 eingeben und in der Steuereinheit 37 abspeichern kann. In vorteilhafter Weiterbildung der Erfindung können der Steuereinheit weitere Eingangssignale X zugeführt werden, die Informationen über erntegutspezifische sowie maschinenspezifische Parameter umfassen. Bezüglich der Erntegutparameter können dies Informationen zur Erntegutart, dem Erntegutdurchsatz sowie der Erntegutfeuchte sein. Die maschinenspezifischen Parameter können insbesondere verschiedenste kinematische Parameter des Schneidwerks 6 sowie der Arbeitsorgane des Mähdreschers 1 umfassen. Im Einzelnen können dies unter anderem Dreschwerkseinstellungen wie etwa die Dreschtrommeldrehzahl oder die Größe des Dreschspaltes 52 sowie die Höhe der dem Schneidwerk 6 zugeordneten Haspel 53 sein.

Die Bewegungsbahn 30 in Fig.2 befindet sich in einer oberen Position 40, wobei die Spindel 31 des Spindelantriebs 27 vollständig ausgefahren ist, so dass ein Winkel 41 zwischen dem Verstellhebel 26 und einer Bezugsachse 42 ein Maximum erreicht hat. Die Bewegungsbahn 30 der Förderzinken 17 ist in einem lotrechten Abstand 43 von dem Hordenschüttler 3 entfernt und die Förderzinken 17 dringen maximal in einer Tiefe 44 in den Gutstrom 10 ein, wobei sie beim Durchdringen des Gutstroms einen Winkel 45 überstreichen. Die Förderzinken 17 heben lediglich eine obere Schicht des Gutstroms 10 geringfügig an. Die sich aufwärts bewegenden Förderzinken 17 sind bereits unterhalb einer horizontalen Bezugsachse 42 wieder in die Abstreifelemente 23 eingefahren, so dass das Erntegut **5** nur wenig nach oben gefördert wird. Die Abscheideleistung der Hordenschüttler **3** wird in der oberen Position 40 der Bewegungsbahn **30** durch die Schüttlerhilfe **12** kaum gesteigert. Um die Wirkung der Schüttlerhilfe **12** einzustellen, fährt die Spindel 31 des Spindelantriebs 27 soweit ein, bis die Bewegungsbahn 30 eine Überwurfreserveposition 46 erreicht, die einen geringeren Abstand zum Hordenschüttler aufweist als die vorgewählte Position 39. Wenn die Überwurfmesseinrichtung **32** in dieser Überwurfreserveposition **46** der Bewegungsbahn 30 für einen Zeitraum kein Stellungssignal O sensiert, fährt die Spindel **31** aus, bis die Bewegungsbahn 30 die vorgewählte Position 39 erreicht. Sobald die Überwurfmesseinrichtung 32 jedoch einen Erntegutstrom 33 sensiert, fährt das Stellglied 28 zumindest soweit aus, bis die Bewegungsbahn **30** eine solche Position erreicht hat, bei der eine weitere Gutmitnahme durch die Förderzinken 17 unterbleibt.

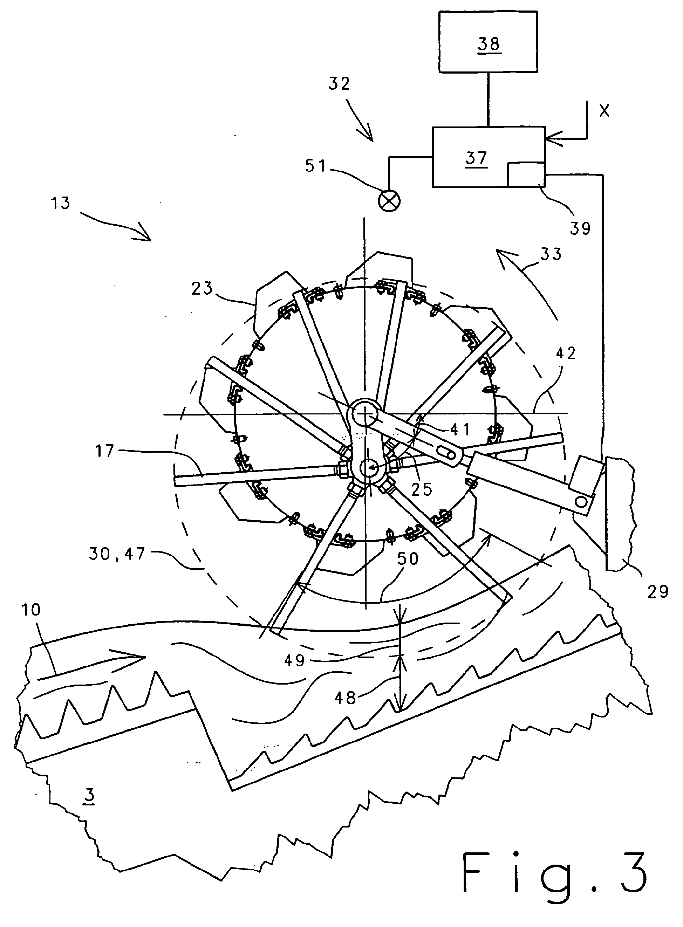

In der Fig.3 sind zum Vergleich die Förderzinken 17 und die Bewegungsbahn 30 der Förderzinken 17 dargestellt, wenn die Bewegungsbahn 30 in eine untere Position 47 verschwenkt ist und der Winkel 41 ein Minimum erreicht hat.
Die Bewegungsbahn **30** der Förderzinken 17 befindet sich in einem verglichen mit dem Abstand **43** (siehe Fig.2) geringeren lotrechten Abstand 48 zum Hordenschüttler 3. Alle auf der unteren Hälfte der Fördertrommel 15 angeordneten Förderzinken 17 ragen über die Abstreifelemente 23 hervor. Die Förderzinken 17 greifen im Vergleich zu Fig. 2 tiefer in die Gutschicht ein und bleiben länger im Eingriff, da sie beim Eingriff einen Winkel 50 überstreichen, der größer als jener Winkel 45 gemäß einer oberen Position nach Fig.2 ist. Dabei ist zu berücksichtigen, das die Materialschichtdicke des auf dem Hordenschüttler 3 geförderten Gutstroms 10 in Fig.2 und Fig 3 gleich ist. Befindet sich die Bewegungsbahn 30 der Förderzinken 17 in der unteren Position 47 besteht die Gefahr, dass der Gutstrom 10 von den Förderzinken 17 mitgenommen und oberschlächtig über das Auflockerungs- und Förderorgan 13 transportiert wird. Als Folge kann es vor dem Auflockerungs- und Förderorgan 13 zu einem Erntegutstau kommen, der den Gutstrom 10 auf den Hordenschüttlern 3 behindert bzw. schlimmstenfalls zum Erliegen bringt. Schieben die Abstreifelemente 23 das Erntegut zudem nicht von den Förderzinken 17 herunter, wickelt sich der Erntegutstrom 33 um das Auflockerungs- und Förderorgan 13.
In Fig.3 ist zudem ein alternatives Ausführungsbeispiel dargestellt, bei dem die Überwurfmesseinrichtung 32 aus einer Lichtschranke 51 besteht, die quer zur Drehrichtung oberhalb der Fördertrommel 15 angeordnet ist.
Bei dem erfindungsgemäßen Mähdrescher 1 ist die Gutmitnahmeintensität des Auflockerungs- und Förderorgan 13 änderbar, um einerseits den Gutstrom 10 so gut wie möglich aufzulockern jedoch gleichzeitig zu verhindern, dass ein Erntegutstrom 33 oberschlächtig über das Auflockerungs- und Förderorgan 13 gefördert wird.
Die Gutmitnahmeintensität ist dabei einerseits abhängig von der kraftschlüssigen sowie der formschlüssigen Verbindung zwischen dem Gutstrom 10 und den Förderzinken 17. Die kraftschlüssige Verbindung ist beispielweise bei feuchtem Stroh stärker als bei trockenem Stroh, die formschlüssige Verbindung ist bei langem Stroh stärker ist als bei Kurzstroh.
Die Gutmitnahmeintensität ist durch die Änderung des Formschlusses zwischen dem Gutstrom 10 und den Förderzinken 17 beeinflussbar, dies kann durch eine
Veränderung der Eindringtiefe der Förderzinken 17 in den Gutstrom 10 und/oder der Anzahl der in den Gutstrom 10 eindringenden Förderzinken 17 erreicht werden.
Zudem ist die Gutmitnahmeintensität durch die Änderung des Kraftschlusses zwischen dem Gutstrom 10 und den Förderzinken 17 beeinflussbar ist, was durch eine Änderung des Winkels zwischen den Förderzinken 17 und dem Gutstrom 10 erreicht werden kann.

### Bezugszeichenliste:

- 1: Mähdrescher
- 2: Tangentialdreschwerk
- 3: Hordenschüttler
- 4: Abscheideeinrichtung
- 5: Erntegut
- 6: Schneidwerk
- 7: Schrägförderer
- 9:
- 10: Gutstrom
- 11: Wendetrommel
- 12: Schüttlerhilfe
- 13: Auflockerungs- und Förderorgan
- 14: Drehachse
- 15: Fördertrommel
- 16: Kurbelwelle
- 17: Förderzinken
- 18: Durchlass
- 19: Führungselemente
- 20: Tragarm
- 21: Achsstummel
- 22: Drehachse
- 23: Abstreifelement
- 24: Schlitz
- 25: Winkel
- 26: Verstellhebel
- 27: Spindelantrieb
- 28: Stellglied
- 29: Seitenwand
- 30: Bewegungsbahn
- 31: Spindel
- 32: Überwurfmesseinrichtung
- 33: Emtegutstrom
- 34: Klappe
- 35: Öffner
- 36: geschlossene Position
- 37: Steuereinheit
- 38: Bedienfeld
- 39: vorgewählte Position
- 40: obere Position
- 41: Winkel
- 42: Bezugsachse
- 43: Lotrechter Abstand
- 44: Tiefe
- 45: Winkel
- 46: Überwurfreserveposition
- 47: untere Position
- 48: lotrechter Abstand
- 49: Tiefe
- 50: Winkel
- 51: Lichtschranke
- 52: Dreschspalt
- 53: Haspel

- O: Stellungssignal
- S: Steuerbefehlssignal
- X: Eingangssignal

## Patentansprüche

1. Mähdrescher mit einer Abscheideeinrichtung (4) zur Abscheidung eines Gutstroms von einem vorwiegend Emtegutreste enthaltenden Gutstrom (10) und wenigstens einem oberhalb der Abscheideeinrichtung (4) angeordneten Auflockerungs- und Förderorgan (13) zur Auflockerung des Gutstroms (10) auf dem Abscheideorgan (4), das wenigstens eine rotierende Fördertrommel (15) umfasst, an der Förderzinken (17) relativ beweglich zur Fördertrommel (15) angeordnet sind wobei die Gutmitnahmeintensität des Auflockerungs- und Förderorgans (13) änderbar ist,
**dadurch gekennzeichnet,**
**dass** die Gutmitnahmeintensität mit einer Überwurfmesseinrichtung (32) ermittelt wird, die oberhalb der Fördertrommel (15) angeordnet ist.

2. Mähdrescher nach Anspruch 1,
**dadurch gekennzeichnet,**
**dass** die Gutmitnahmeintensität durch die Änderung des Formschlusses und/oder Kraftschlusses zwischen dem Gutstrom (10) und den Förderzinken (17) beeinflussbar ist.

3. Mähdrescher nach einem der vorhergehenden Ansprüche,
**dadurch gekennzeichnet,**
**dass** die Gutmitnahmeintensität durch die Änderung der Drehzahl des Auflockerungs- und Förderorgans (13) beeinflussbar ist.

4. Mähdrescher nach einem der vorhergehenden Ansprüche,
**dadurch gekennzeichnet,**
**dass** die Förderzinken (17) auf einer kreisförmigen Bewegungsbahn (30) umlaufen, deren Lage relativ zur Fördertrommel (15) änderbar ist.

5. Mähdrescher nach einem der vorhergehenden Ansprüche,
**dadurch gekennzeichnet,**
**dass** die Überwurfmesseinrichtung (32) einen in Drehrichtung der Fördertrommel (15) über die Fördertrommel (15) hinweg geförderten Emtegutstrom (33) ermittelt.

6. Mähdrescher nach einem der vorhergehenden Ansprüche,
**dadurch gekennzeichnet,**
**dass** die Überwurfmesseinrichtung (32) aus wenigstens einer drehbar gelagerten Klappe (34) besteht, die durch den Aufprall des Erntegutstroms (33) verschwenkt wird.

7. Mähdrescher nach Anspruch 6,
**dadurch gekennzeichnet,**
**dass** der Klappe (34) ein Öffner (35) zugeordnet ist, der ein Signal (O) generiert, sobald sich die Klappe (34) außerhalb einer Schließposition (36) befindet.

8. Mähdrescher nach einem der vorhergehenden Ansprüche,
**dadurch gekennzeichnet,**
**dass** die Überwurfmesseinrichtung (32) aus wenigstens einer Lichtschranke (51) besteht und wobei die Lichtschranke (51) quer zur Drehrichtung der Fördertrommel (15) angeordnet ist.

9. Mähdrescher nach einem der vorhergehenden Ansprüche,
**dadurch gekennzeichnet,**
**dass** die Lage der Bewegungsbahn (30) der Förderzinken (17) über ein Stellglied (28) änderbar ist.

10. Mähdrescher nach einem der vorhergehenden Ansprüche,
**dadurch gekennzeichnet,**
**dass** das Stellglied (28) und die Überwurfmesseinrichtung (32) mit einer Steuereinheit (37) verbunden sind.

11. Mähdrescher nach einem der vorhergehenden Ansprüche,
**dadurch gekennzeichnet,**
**dass** die Steuereinheit (37) das Stellsignal (S) in Abhängigkeit von einem oder mehreren Emtegutparametem oder Maschinenparametem generiert.

12. Mähdrescher nach Anspruch 11,
**dadurch gekennzeichnet,**
**dass** die Erntegutparameter die Erntegutart, der Erntegutdurchsatz und die Erntegutfeuchte sein können.

13. Mähdrescher nach Anspruch 11,
**dadurch gekennzeichnet,**
**dass** die Maschinenparameter kinematische Parameter des Schneidwerks (6) und kinematische Parameter der Arbeitsorgane (2, 7, 11) sein können.

14. Mähdrescher nach einem der vorhergehenden Ansprüche,
**dadurch gekennzeichnet,**
**dass** die Bewegungsbahn (30) bis zu einer Überwurfreserveposition (46) verstellt wird, die eine vorgewählte Position (39) unterschreitet und das die Bewegungsbahn (30) anschließend in die vorgewählte Position (39) verstellt wird, wenn die Überwurfmesseinrichtung (32) in der Überwurfreserveposition (46) für einen Zeitraum keinen Erntegutstrom (33) sensiert.

15. Mähdrescher nach einem der vorhergehenden Ansprüche,
**dadurch gekennzeichnet,**
**dass**, das Stellglied (28) bei Sensierung eines Erntegutstromes (33) durch die Überwurfmesseinrichtung (32) zumindest soweit ausfährt, bis die Bewegungsbahn (30) eine obere Position (40) erreicht, in der die Überwurfmesseinrichtung (32) keinen Erntegutstrom (33) mehr sensiert.

## Claims

1. A combine harvester comprising a separator device (4) for separating a flow of material from a flow of material (10) predominantly containing crop material residues and at least one loosening and conveyor member (13) disposed above the separator device (4) for loosening up the flow of material (10) on the separator device (4), which includes at least one rotating conveyor drum (15) on which conveyor tines (17) are arranged movably relative to the conveyor drum (15) and wherein the material entrainment intensity of the loosening and conveyor member (13) is variable,
**characterised in that**
the material entrainment intensity is ascertained with an overshoot measuring device (32) arranged above the conveyor drum (15).

2. A combine harvester according to claim 1 **characterised in that** the material entrainment intensity can be influenced by the variation in positive engagement and/or force-related engagement between the flow of material (10) and the conveyor tines (17).

3. A combine harvester according to one of the preceding claims **characterised in that** the material entrainment intensity can be influenced by the change in the rotary speed of the loosening and conveyor member (13).

4. A combine harvester according to one of the preceding claims **characterised in that** the conveyor tines (17) circulate on a circular path of movement (30), the position of which relative to the conveyor drum (15) is variable.

5. A combine harvester according to one of the preceding claims **characterised in that** the overshoot measuring device (32) detects a flow of crop material (33) which is conveyed beyond the conveyor drum (15) in the direction of rotation of the conveyor drum (15).

6. A combine harvester according to one of the preceding claims **characterised in that** the overshoot measuring device (32) comprises at least one rotatably supported flap (34) which is pivoted by the impact of the flow of crop material (33).

7. A combine harvester according to claim 6 **characterised in that** associated with the flap (34) is an opening device (35) which generates a signal (O) as soon as the flap (34) is outside a closed position (36).

8. A combine harvester according to one of the preceding claims **characterised in that** the overshoot measuring device (32) comprises at least one light barrier arrangement (51) and wherein the light barrier arrangement (51) is arranged transversely with respect to the direction of rotation of the conveyor drum (15).

9. A combine harvester according to one of the preceding claims **characterised in that** the position of the path of movement (30) of the conveyor tines (17) is variable by way of a control member (28).

10. A combine harvester according to one of the preceding claims **characterised in that** the control member (28) and the overshoot measuring device (32) are connected to a control unit (37).

11. A combine harvester according to one of the preceding claims **characterised in that** the control unit (37) generates the control signal (S) in dependence on one or more crop material parameters or machine parameters.

12. A combine harvester according to claim 11 **characterised in that** the crop material parameters can be the kind of crop material, the crop material throughput and the crop material moisture content.

13. A combine harvester according to claim 11 **characterised in that** the machine parameters can be kinematic parameters of the cutting mechanism (6) and kinematic parameters of the working members (2, 7, 11).

14. A combine harvester according to one of the preceding claims **characterised in that** the path of movement (30) is displaced to an overshoot reserve position (46) which falls short of a preselected position (39) and that the path of movement (30) is then displaced into the preselected position (39) when the overshoot measuring device (32) does not sense any crop material flow (33) for a period in the overshoot reserve position (46).

15. A combine harvester according to one of the preceding claims **characterised in that** the control member (28) is extended upon sensing of a crop material flow (33) by the overshoot measuring device (32) until the path of movement (30) reaches an upper position in which the overshoot measuring device (32) no longer senses a crop material flow (33).

## Revendications

1. Moissonneuse-batteuse avec un dispositif séparateur (4) pour séparer un flux de produit d'un flux de produit (10) contenant principalement des résidus de produit récolté, et avec au moins un organe de desserrement et d'amenée (13) qui est disposé au-dessus du dispositif séparateur (4) et sert à desserrer le flux de produit (10) passant sur l'organe séparateur (4) et qui comporte au moins un tambour d'amenée rotatif (15) sur lequel des dents d'amenée (17) sont montées mobiles par rapport au tambour d'amenée (15), l'intensité de l'organe de desserrement et d'amenée (13) à entraîner le produit étant variable, **caractérisée en ce que** l'intensité d'entraînement de produit est déterminée par l'intermédiaire d'un dispositif de mesure de remontées (32) disposé au-dessus du tambour d'amenée (15).

2. Moissonneuse-batteuse selon la revendication 1,
**caractérisée en ce qu'**on peut influer sur l'intensité d'entraînement de produit en modifiant la liaison par complémentarité de formes et/ou la liaison par conjugaison de forces entre le flux de produit (10) et les dents d'amenée (17).

3. Moissonneuse-batteuse selon une des revendications précédentes, **caractérisée en ce qu'**on peut influer sur l'intensité d'entraînement de produit en modifiant la vitesse de rotation de l'organe de desserrement et d'amenée (13).

4. Moissonneuse-batteuse selon une des revendications précédentes, **caractérisée en ce que** les dents d'amenée (17) tournent sur une trajectoire circulaire (30) dont la position par rapport au tambour d'amenée (15) peut être modifiée.

5. Moissonneuse-batteuse selon une des revendications précédentes, **caractérisée en ce que** le dispositif de mesure de remontées (32) détecte un flux de produit récolté (33) déplacé au-delà du tambour d'amenée (15) dans le sens de rotation du tambour d'amenée (15).

6. Moissonneuse-batteuse selon une des revendications précédentes, **caractérisée en ce que** le dispositif de mesure de remontées (32) se compose d'au moins un volet monté pivotant (34) qui bascule sous l'impact du flux de produit récolté (33).

7. Moissonneuse-batteuse selon la revendication 6,
**caractérisée en ce qu'**au volet (34) est associé un contact à ouverture (35) qui génère un signal (O) dès que le volet (34) se trouve en dehors d'une position fermée (36).

8. Moissonneuse-batteuse selon une des revendications précédentes, **caractérisée en ce que** le dispositif de mesure de remontées (32) se compose d'au moins un barrage photoélectrique (51), et le barrage photoélectrique (51) étant disposé transversalement au sens de rotation du tambour d'amenée (15).

9. Moissonneuse-batteuse selon une des revendications précédentes, **caractérisée en ce que** la position de la trajectoire (30) des dents d'amenée (17) est modifiable par l'intermédiaire d'un organe de positionnement (28).

10. Moissonneuse-batteuse selon une des revendications précédentes, **caractérisée en ce que** l'organe de positionnement (28) et le dispositif de mesure de remontées (32) sont connectés à une unité de commande (37).

11. Moissonneuse-batteuse selon une des revendications précédentes, **caractérisée en ce que** l'unité de commande (37) génère le signal de réglage (S) en fonction d'un ou plusieurs paramètres de produit récolté ou paramètres de machine.

12. Moissonneuse-batteuse selon la revendication 11,
**caractérisée en ce que** les paramètres de produit récolté peuvent être la nature du produit récolté, le débit du produit récolté et l'humidité du produit récolté.

13. Moissonneuse-batteuse selon la revendication 11,
**caractérisée en ce que** les paramètres de machine peuvent être des paramètres cinématiques de la barre de coupe (6) et des paramètres cinématiques des organes de travail (2, 7, 11).

14. Moissonneuse-batteuse selon une des revendications précédentes, **caractérisée en ce que** la trajectoire (30) est déplacée jusqu'à une position de réserve anti-remontées (46) qui se trouve en dessous d'une position présélectionnée (39) et **en ce que** la trajectoire (30) est ensuite amenée dans la position présélectionnée (39) lorsque, pendant un intervalle de temps, le dispositif de mesure de remontées (32) ne détecte pas de flux de produit récolté (33) dans la position de réserve anti-remontées (46).

15. Moissonneuse-batteuse selon une des revendications précédentes, **caractérisée en ce que**, lors de la détection d'un flux de produit récolté (33) par le dispositif de mesure de remontées (32), l'organe de positionnement (28) se déploie au moins jusqu'à ce que la trajectoire (30) atteigne une position supérieure (40) dans laquelle le dispositif de mesure de remontées (32) ne détecte plus de flux de produit récolté (33).
